# EUROPEAN PATENT APPLICATION

(11) **EP 4 450 264 A1**
(43) Date of publication of application: **23.10.2024**
(21) Application number: 23168430.9
(22) Date of filing: 18.04.2023
(51) Int. Cl.: B29C 70/38, B29C 70/16

(54) **AN AUTOMATED FIBER PLACEMENT DEVICE AND METHOD OF PRODUCING FORMABLE LAMINATES**

(71) Applicant: Euro Advanced Carbon Fiber Composites GmbH, 73730 Esslingen Am Neckar (DE)
(72) Inventor: Yoshiyama, Takashi, 73730 Esslingen (DE); Tartler, Manuel, 73730 Esslingen (DE)
(74) Representative: Kador & Partner Part mbB

(57) **Abstract**

The present invention relates to method for producing fiber-composite laminates with incised fibers and the device for producing the same, comprising an incision apparatus in an automated lamination device such as automated fiber placement machines (AFP). The incisions ensure a better formability of the laminate combined with good mechanical properties. According to the invention the laminate can have various incision patterns and can also be turned on and off.

## Description

### Field of the invention

The present invention describes a manufacturing device and a method for producing prepreg laminates, comprising one or multiple layers of fiber sheets, which are pre-impregnated with resin and in a semi-cured stage that exhibits excellent formability and high mechanical properties after curing. The present invention is based on a method of stacking multiple layers of prepreg with reinforcing fibers and resin, wherein the machine stably and continuously forms and supply an incised prepreg and laminates it layer by layer to form an incised laminated body. More specifically, the present invention relates to a laminated base material using a prepreg, which is an intermediate base material of a fiber reinforced plastic preferably used for example for automotive components, aviation parts, sports equipment and other lightweight structures.

### Background of the invention

Fiber reinforced plastics made of reinforcing fibers and matrix resins are attracting attention in industrial applications because of their low weight, high specific strength, specific elastic modulus, excellent mechanical properties, and high-performance characteristics such as environmental resistance and chemical resistance, and their demand is increasing year by year.

Fiber-reinforced composites can be processed and manufactured in a wide variety of ways, using semi-finished fiber products such as rovings, fabrics, non-crimped fabrics (NCF), mats, etc. which are then impregnated with a resin and cured, or using semi-cured pre-impregnated materials, so-called prepregs where the fibers already embedded in a semi cured resin and stable to handle.

As a molding method, autoclave curing or a pressing method using a high-temperature mold is used to cure a laminate consisting of several individual layers into a solid fiber composite part. When using continuous fiber-reinforced prepregs, the parallel and targeted alignment of the reinforcing fibers results in high-performance lightweight structures with very low deviations in mechanical properties. Such parts are very common in aviation and are used for structures such as wings and fuselages.

Since most semi-finished fiber products are planar and flat, in the case of a continuous fiber laminate, it is difficult to form a complex shape such as a three-dimensional shape from a flat semi-finished material, and is mainly limited to parts, that are close to a planar shape.

When processing more even or planar prepreg laminates, it is common to produce a laminate with several smaller and overlapping cutouts, or place cuts in individual layers or the entire laminate in a targeted manner in order to be able to form complex areas (e.g. 3D rounded corners), which considerably reduces the mechanical properties.

From the viewpoint of production efficiency and quality maintenance, the prepreg laminate, is formed using a prepreg automatic lamination device. Specifically, the automatic laminating device removes the release liner from the prepreg in a semi-cured state and forms a semi-cured prepreg laminate layer by layer from one or more prepreg tapes of different fiber directions as preprogrammed. The manufacturing process is known as automated fiber placement (AFP) or automated tape laying (ATL).

For AFP it's common to produce the laminate directly on or near the final shape, to reduce higher forming degrees without the need for cuts, but there's a need for separate tools and increased programming and optimization effort.

Because load paths often do not lead in a straight line through the component, it can be helpful or necessary that the fiber alignment do not run along a straight or geodesic line but along a curve. Conventional prepreg materials can only be processed in curves to a limited degree and can usually only be achieved with very narrow tapes and large radii. This is because when steering prepreg tapes along a curve, the outer fibers have to be longer than the inner ones and the prepreg would therefore have to shear. Usually, when the curve becomes too tight, poor shear behavior results in waviness or wrinkles.

Another possibility to produce complex fiber reinforced composite components is the use of semi-finished fiber products such as sheet mold compounds (SMC), in which the fibers are chopped to a certain length and randomly oriented and embedded in a semi-cured resin matrix. SMC materials show excellent flow and forming behavior but are mechanically less performant due to the unarranged fiber orientation and fiber discontinuities.

In order to take advantage of unidirectional and continuous fiber-reinforced materials and to achieve better formability, patent document 1, patent document 2 and patent document 3 describe a material and method to insert fine cuts into the fibers, to provide the fiber sheet with a special incision pattern to improve the formability and without impairing the mechanical properties too much.

In particular, the use of blade rollers has proven to be more productive and have a higher accuracy compared to blade punching dies, whereby the incision takes place continuously in a separate process, where a prepreg roll is unwound on one side, the incisions are made and rolled up again on the other side

### Patent Documents

Patent Document 1: US 10,913,236 B2 Incised prepreg, cross-ply laminate, and production method for incised prepreg
Patent Document 2: EP 2127840 B1 Prepreg base material, laminated base material, process for producing prepreg base material, and process for producing fiber-reinforced plastic
Patent Document 3: JPH09254227A Thermoplastic resin-covered reinforcing fiber bundle and its preparation

### Problems with the prior art systems and methods

Although continuous fiber-reinforced plastics have very good mechanical properties, the drapability and formability in the manufacturing process of semi-cured semi-finished products is very limited. When processing prepregs in automated fiber placement, for example, either slightly curved components are produced directly or must be postformed. Complex component geometries can only be achieved to a limited extent and, above a certain degree of forming, usually have a negative effect on component quality. This problem is usually solved by predefined cuts in the laminate or individual layers, to achieve high degrees of forming with good component quality, which, however, reduces the mechanical performance and has a negative effect on the workload.

### Disclosure of the invention

In order to solve this problem, the present invention describes an automatic prepreg lamination device comprising the following incision apparatus.

This incision apparatus (8) comprises, preferably consists of, a rotary blade roller (8a) in which one or more blades are arranged and a supporting roller (8b) installed approximately parallel and close to each other. The prepreg passes in a tangential direction between the rotary blade roller (8a) and the supporting roller (8b) while applying tension to the prepreg containing reinforced fibers and resin. The rotary blade roller (8a) chops at least some reinforcing fibers of a fiber length within the range of from 10 mm to 300 mm to produce an incised prepreg.

After passing through the prepreg incision apparatus, the incised prepreg is raised to a predetermined temperature, tension is applied to it and the prepreg is laminated against the lamination surface by moving the lamination roller (4) which presses the prepreg against the lamination surface. This is the automatic lamination method.

In view of prior art techniques and materials, the present invention provides good flowability and formability of prepreg laminates to produce complex shapes for fiber reinforced plastic parts, wherein the prepreg exhibits excellent mechanical properties applicable as a structural material, low variability, and excellent dimensional stability. The manufacturing method for this prepreg laminate substrate is provided by an automatic lamination device.

### Brief description of the drawings

Fig. 1: Embodiment 1 showing a conceptual design of an automatic lamination apparatus having an incision prepreg processing apparatus of the present invention
Fig. 2: Another example of Embodiment 1 showing of a conceptual design of an automatic lamination apparatus having an incision prepreg processing apparatus of the present invention on another position
Fig. 3: Example Relationship between temperature and viscoelasticity of different prepreg resin systems
Fig. 4: Example Relationship of tensile force and elongation of various strain rates of an incised prepreg
Fig. 5: Tension is applied at a suitable temperature to achieve uniform elongation of an incised prepreg
Fig. 6: Example Relationship of temperature dependent tensile stress of an incised prepreg
Fig. 7: tensile test specimens after testing at increasing temperatures from 20°C (left) to 60°C (right) with an incised prepreg
Fig. 8: Fiber placement with steering along a curve with Radius 300 mm to 1500 mm
Fig. 9: Example of a schematic Incision apparatus (8)
Fig. 10: Embodiment 2 showing a conceptual design of an automatic laminating apparatus having an incision device which can also be deactivated
Fig. 11: Embodiment 3 shows a conceptual construction of an automatic laminating apparatus with an incision device that can change its cutting pattern, for example, in the form of a plurality of preconfigured rollers
Fig. 12: Configuration options for the incision pattern
Fig. 13: Example of stacking of incised prepregs to form a laminate

### Explanation of Numerals

- 1:: Prepreg base material roll
- 2:: Guide roller
- 3:: Feed roller
- 4:: Lamination roller
- 5:: Release liner recovery roll
- 6:: Heating device
- 7:: Lamination surface
- 8:: Incision apparatus
- 8a:: Rotary blade roller
- 8b:: Supporting roller
- 9:: Cutting device
- 10:: Prepreg Tape with release liner
- 10a:: Prepreg base material (unidirectional reinforcing fibers and plastic or resin matrix)
- 10b:: Release liner
- 11a:: Incised prepreg
- 11b:: Currently laminated prepreg with incisions
- 11c:: Incision in the incised prepreg
- 11d:: Incision width
- 11e:: Incision distance, resulting fiber/filament length
- 11f:: Incision angle
- 12:: Laminate
- 20:: Lamination direction
- 21:: Pull-off direction of the prepreg material
- 22:: relative movement of the lamination surface to lamination roller
- 25a:: first layer of laminate
- 25b:: second layer of laminate
- 25c:: third layer of laminate
- 26a:: incision of first layer
- 26c:: incision of third layer (position shifted to the first layer)
- MD:: Machine Direction
- TD:: Transverse Direction

### Technical implementation of the invention and embodiments

The invention provides a lamination device for producing a fiber reinforced laminate comprising at least one prepreg base material roll (1) for providing a prepreg base material (10a), at least one incision apparatus (8) for forming one or more incisions (11c) in the prepreg base material (10a) to obtain an incised prepreg (11a), at least one cutting device (9) for cutting the incised prepreg (11a) in transverse direction (TD) into at least one incised layer, and a lamination roller (4) for laminating the incised prepreg (11a) onto a lamination surface (7) to form a laminate (12), wherein the prepreg base material (10a) comprises unidirectional reinforcing fibers and a polymer matrix system.

The prepreg base material roll (1) comprises a wound layer of prepreg base material (10a) on a spool, whereby the prepreg base material (10a) comprises unidirectional reinforcing fibers, the unidirectional reinforcing fibers preferably embedded in a polymer matrix system.

Carbon fibers, glass fibers, aramid fibers are preferably used as the unidirectional reinforcing fibers, as well as natural fibers or other polymer fibers. More preferably, the unidirectional reinforcing fibers comprise or consist of carbon fibers.

The polymer matrix system preferably comprises, or consists of, a thermoset resin, a UV-curable resin or a thermoplastic resin or the like. The polymer matrix system is preferably in a semi-cured state.

The thermoplastic resin preferably comprises, or consists of, polypropylene (PP), polyamide (PA), polyether ether ketone (PEEK), or polyphthalamide (PPA). The thermoset resin preferably comprises, or consists of, a polyester resin, a vinyl ester resin, an epoxy resin, a phenolic resin or an urethane resin.

The prepreg base material (10a) is preferably provided with a release liner (10b) so that the layers on the spool do not stick together. The prepreg base material (10a) and the release liner (10b) form a prepreg tape with release liner (10). As a release liner, a release paper or plastic release films are preferably used, which is also often called backing film, backing paper or liner. The release liner is not required for the actual lamination process and is detached from the prepreg in the process and preferably wound up on a release liner recovery roll (5).

The prepreg base material (10a) is usually slitted to a certain width from a prepreg mother roll. Common established widths are 1/8", 1/4", 1/2", 1" and 2", as well as 12mm for AFP or 3, 6 or 12 inches for ATL, whereby the invention is independent of the width of the selected tapes.

Preferably, the incision apparatus (8) comprises a rotary blade roller (8a) and a supporting roller (8b). The prepreg base material (10a) is passed tangentially between the two rollers. The supporting roller serves as counter support for the rotary blade roller. The incision apparatus (8) preferably comprises one or more rotary blade rollers (8a) and one or more supporting rollers (8b), more preferably the incision apparatus (8) comprises between one and five rotary blade rollers (8a) and between one and five supporting rollers (8b), even more preferably the incision apparatus (8) comprises between two and four rotary blade rollers (8a) and between two and four supporting rollers (8b). Typically, the number of rotary blade rollers (8a) is the same as the number of supporting rollers (8b).

Preferably, the rotary blade roller (8a) comprises one or more blades, more preferably the rotary blade roller (8a) comprises one or more blades and the supporting roller (8b) comprises one or more blades. The number of blades of the blade roller and supporting roller can be chosen based on the width of the material and the blade roller.

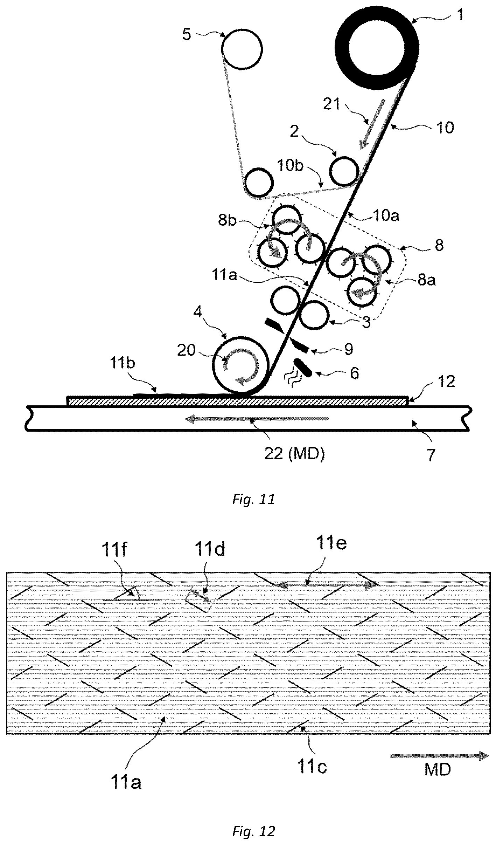

The one or more incisions (11c) formed in the incised prepreg (11a) can provide a desired incision pattern. The incision pattern, as exemplarily shown in Fig. 12, results from the incision width (11d), incision angle (11f), incision distance (11e), orientation in relation to the machine direction and/or the distribution of the rotary blade roller and the support roller. The incision pattern influences the forming behavior and the mechanical properties of the incised prepreg.

To obtain the desired incision pattern on the incised prepreg (11a), the blades are preferably arranged or formed as follows.
each incision width (11d) is preferably of from 0.1 mm to 20 mm, more preferably of from 0.5 mm to 5 mm, and most preferably of from 1 mm to 2 mm; and/or
the incision pattern preferably has a plurality of rows offset from one another in machine direction and more preferably both offset and the incision direction being mirrored along the direction of the fibers; and/or
the alignment of the incisions is preferably not perpendicular to the fiber direction, more preferably the alignment of the incisions is at an incision angle (11f) of from 5° to 45°, most preferably of from 10° to 20° in relation to the fiber direction; and/or
the filament length or fiber length, which results of the incision distance (11e), is preferably of from 10 mm to 300 mm, more preferably of from 15 mm to 60 mm, even more preferably of from 20 mm to 30 mm, and most preferably 25.4 mm; and/or
a homogeneous and evenly distributed cutting pattern is created and each filament is preferably severed in the aforementioned filament length.

Shorter fiber or filament lengths worsen the mechanical properties, longer fiber or filament lengths worsen the forming behavior. Finely evenly distributed and narrow sloped incisions lower stress concentrations and increase mechanical properties.

The invention also provides a lamination device, wherein the incision apparatus (8) comprises a laser cutter instead of a rotary blade and support roller. The incision preferably results in the same pattern as described previously. The advantages of laser cutting are the free design of the cutting pattern and no wear and tear on the blades occurs.

Preferably, each prepreg base material roll (1) has its own incision apparatus (8). This is advantageous in the case that several prepregs are processed at the same time side by side or one above the other.

The lamination device preferably further comprises a heating device (6) for heating preferably a part of the incised prepreg (11a) and/or of the lamination surface (7). The heating device (6) is preferably located upstream of the lamination roller (4) and downstream of the cutting device (9).

Preferably, the heating device (6) comprises an infrared lamp, a laser or a hot gas nozzle.

The heating device (6) is preferably installed close to the lamination roller (4) for heating a predetermined region of the prepreg (11a) or the laminate (12) or both. This is used to increase the tack and stickiness of the prepreg so that the processed material can be laminated well to become a laminate body.

The lamination device further comprises a cutting device (9) for cutting the incised prepreg (11a) in a transverse direction (TD) as a whole. Thereby, an incised layer is formed. The cut is usually necessary at the laminate boundary to create a component edge and a laminate with a finite size. Each cut makes it possible to start another prepreg tape at the same or a different start point.

Preferably, the cutting device (9) is located downstream of the incision apparatus (8).

The lamination device preferably further comprises a release liner recovery roll (5) for recovering a release liner (10b) attached to the prepreg base material (10a) if present. The position to recover the release liner can be either before or after the incision apparatus and is described in more detail in embodiment 1 and 2.

The lamination surface (7) is located on a trestle (not shown). The lamination surface (7) is configured to be movable in any direction, not only in the lamination direction (20) but also relative to the laminate roller (4).

The lamination surface (7) is, in this example, a flat surface and the surface on which the laminate (12) is placed, which is a laminate of one or more semi-cured prepregs. The currently laminated semi-cured prepreg (11b) is attached to the laminate (12), which constitutes a new laminated body (12).

The first guide roller (2) guides the prepreg (10) from the prepreg base material roll (1).

The feed roller (3) feeds the prepreg from the prepreg base material roll (1) to its downstream. The feed roller (3) feeds at least until the prepreg (11a) is located under the lamination roller (4). The relative movement between the lamination roller (4) and the surface (7) then automatically pulls out the material (21).

The laminating roller (4), feed roller (3), guide roll (2) and material roll (1) are configured to maintain a constant fiber tension to the prepreg (10, 10a and 11a). For example, the prepreg between the guide roller (2) and the feed roller (3) or the lamination roller (4) is controlled to a constant tension by controlling the rotation of the prepreg base material roll (1).

The invention further provides a method for producing a multilayer laminate (12), comprising the steps of
a) providing a prepreg base material (10a) by a prepreg base material roll (1) and passing the prepreg base material (10a) to at least one incision apparatus (8), wherein the prepreg base material (10a) comprises unidirectional reinforcing fibers and a polymer matrix system,
b) forming one or more transverse incisions (11c) and/or slope incisions (11c) in the prepreg base material (10a) by the at least one incision apparatus (8) to obtain an incised prepreg (11a), and passing the incised prepreg (11a) to a lamination roller (4),
c) laminating, preferably staggered laminating, the incised prepreg (11a) onto a lamination surface (7) by the lamination roller (4) so as to form a laminate (12) on a lamination surface (7).

Preferably, the method further comprises the step of heating at least a part of the incised prepreg (11a) by a heating device (6) to laminate the incised prepreg to a laminate body (12).

Preferably, the incision apparatus (8) comprises a rotary blade roller (8a) and a supporting roller (8b), the rotary blade roller (8a) comprising one or more blades and/or the supporting roller (8b) comprising one or more blades.

The invention also offers the possibility, wherein the number and/or the angle and/or the width of the blades of the rotary blade roller (8a) can be changed and/or wherein the number and/or the angle and/or the width of the blades of the supporting roller (8b) can be changed manually or automatically during the process. Reference is made to what has been described above for the lamination device. This allows different mechanical properties and forming behavior to be achieved. The implementation is described in more detail in Embodiment 4.

Preferably, the change of the number and/or of the angle and/or the width of the blades is done manually or automatically.

Preferably, the forming of one or more incisions (11c) in the prepreg base material (10a) is done continuously or non-continuously. This can be used to laminate areas and/or layers with and without incisions. As example flat areas without subsequent forming can be laminated with endless fibers without incisions and complex component areas with incisions in the same laminate. The implementation is described in more detail in Embodiment 3.

Preferably, step a) is performed continuously.

Preferably, the method further comprises the step of cutting the incised prepreg (11a) in a transverse direction (TD) as a whole, more preferably the method further comprises the step of cutting the incised prepreg (11a) before the incised prepreg (11a) is passed to the lamination roller (4). The cutting of the incised prepreg (11a) is preferably done with a cutting device (9) as described in all embodiments herein.

The invention further offers the possibility not only to make straight paths, but also to make curved paths possible. Preferably the incised prepreg (11a) is laminated in step c) along a straight line and/or along a curve.

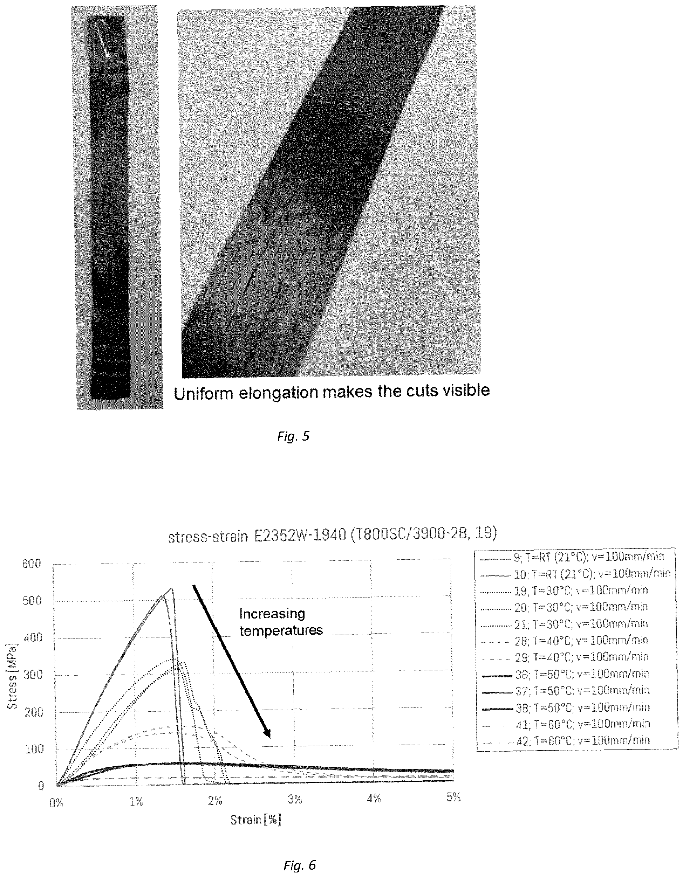

In the heating region (6), the prepreg could also be raised to an appropriate temperature to achieve an optimum state. The optimum state means that when tension is applied to the prepreg, the reinforcing fibers cut by the blade roller extends moderately through the resin, as shown in Fig. 5, and the width of the tow bundle does not change greatly. This temperature also depends on the material used for the prepreg. In this example, 60°C was selected using Prepreg type E2352W-1940 (T800SC/3900-2B, 19) of Toray. When it is lower than this temperature, there is a disadvantage that the tension is getting too high, and the material will not stretch evenly.

With the possibility that prepreg can be stretched from a certain temperature with little tensile force, length differences in fiber placement can be compensated. Differences in length occur, for example, with 3D curved components or when laying prepregs along a curve where the fibers on the outside of the curve are longer than the fibers on the inside.

Preferably, the incisions (11c) have a width which is smaller than a width of the prepreg base material (10a).

Preferably, in step b) the distance between incisions (11c) in the prepreg base material (10a) in a machine direction (MD) is of from 10 mm to 300 mm.

Preferably, a lamination device as described herein is preferably used in the method of the invention.

Preferably, the unidirectional reinforcing fibers comprise, or consist of, carbon fibers, glass fibers, polymer fibers or natural fibers, more preferably carbon fibers, more preferably the unidirectional reinforcing fibers comprise, or consist of, carbon fibers.

The invention further provides a laminate obtained by the method according to the invention.

The invention provides a laminate wherein incised prepregs (11a) are laminated on top of the laminate (12) to obtain a multilayer laminate (12).

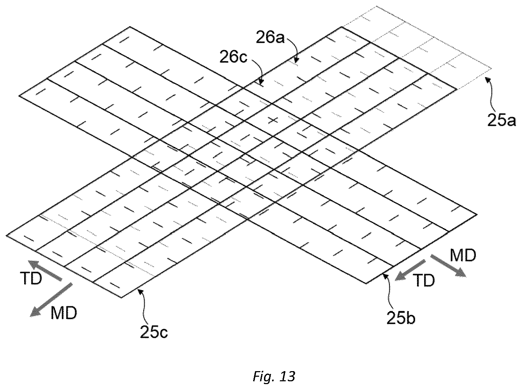

In order not to reduce the mechanical properties of the incisions too much, it is recommended not to laminate the incised prepregs (11a) on top of each other exactly overlapping but offset from layer to layer in the laminate, see Fig. 13 showing first layer of laminate (25a) with incisions (26a), second layer of laminate (25b) and third layer of laminate (25c) with incisions (26c) in a staggered arrangement. This is described in the method as staggered laminating.

Preferably, the incisions are only present in a part of one or more layers of the laminate.

### Embodiments

Hereinafter, the embodiment in which the present invention is applied referring to the drawing will be described in detail. The drawings used in the following description are intended to explain the configuration of the embodiment of the present invention. The size, thickness, dimensions, and the like of each part illustrated may differ from the dimensional relationship of the actual prepreg automatic lamination apparatus.

All preferred embodiments of the device of the invention as described herein are also preferred embodiments of the process of the invention, if applicable and of the laminate obtained by the method, if applicable.

### First Embodiment

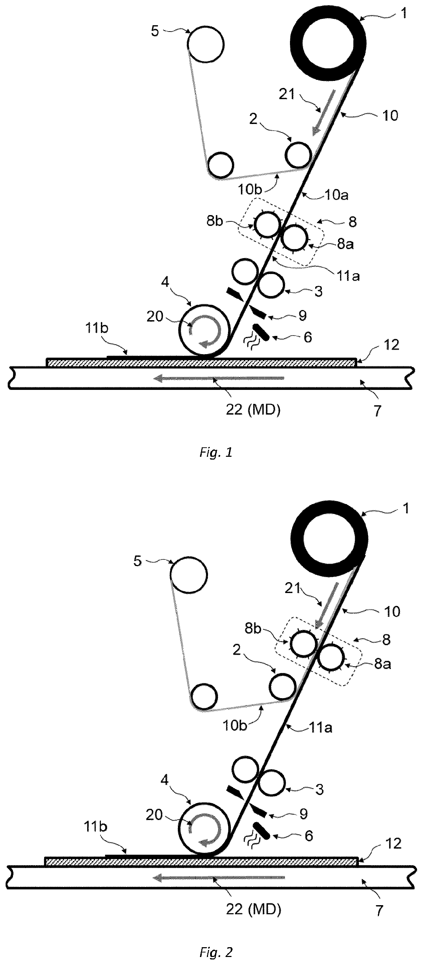

Fig. 1 shows a schematic configuration of the prepreg automatic lamination device according to the first embodiment of the present invention. The first embodiment prepreg automatic lamination apparatus includes a lamination surface (7), a prepreg base material roll (1), a guide roll (2), rotary blade roller (8a), a feed roller (3), a cutting device (9), a heating device (6), a lamination roller (4), and a release liner recovery roll (5).

Fig. 1 schematically shows a Prepreg with incisions (11b) laminated on the upper surface of the laminate (12) placed on a lamination surface (7). The lamination direction (22) indicates the direction of movement over the lamination surface (7) during the prepreg lamination process. The pull-off direction (21) indicates the feed direction of the prepreg (10).

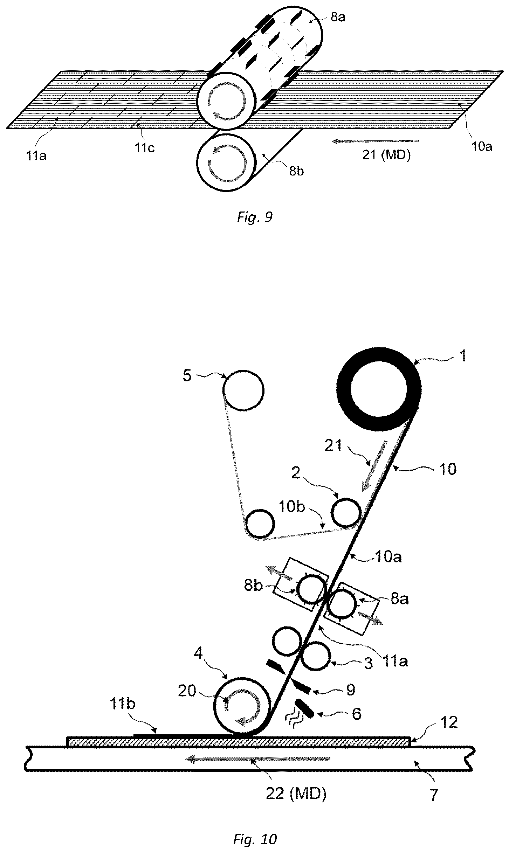

In Embodiment 1 an incision apparatus (8) is provided between the guide roll (2) and the feed roller (3). This incision apparatus (8) has a structure as shown in Fig. 9 (See also Fig. of Toray Patent JP.5223354)

The cutting device (9) is different from the incision apparatus, since not only small incisions are made in the material, but the entire prepreg is cut off. This allows a finite length of prepreg strip to be laminated and restarted in a new position or with a new orientation with a new prepreg strip.

The incision apparatus (8), comprising a Rotary blade roller (8a) and a supporting roller (8b) can also be installed between the prepreg base material roll (1) and the guide roll (2). In this case, the incisions are made on the prepreg in a state where the release liner (10b) is still in contact with the prepreg (10a). For the invention, it is not important whether the incision apparatus is arranged in the process direction before (Fig. 1) or after the detachment and winding up of the release liner (Fig. 2).

### Second embodiment

In the second embodiment (Fig. 10), the incision apparatus (8) has the function that it can be deactivated, e.g. be moved away from the prepreg, so as not to cut the incision pattern into the prepreg as required. This deactivation function can be programmed in advance.

By switching the incision apparatus (8) on and off, segments or areas can be made with and without incisions.

By segmenting prepreg with and without incisions, a laminate can be produced which has different forming properties. For example, incisions can only be made in the laminate in areas that require complex forming and thus good formability. The rest of the laminate benefits from the unmodified mechanical properties of the prepreg.

### Third embodiment

In the third embodiment (Fig. 11), there are a plurality of rolls with blades (8a and 8b) and a function that can change the pattern of the incision as necessary. This function can be set programmable in advance.

### Fourth embodiment

In the fourth embodiment, the incision apparatus (8) comprises a laser cutter, with which the incisions are made in the prepreg using a laser beam. With this embodiment, the pattern and the amount of cut can be adjusted as desired, and it also eliminates the wear and tear on the blades that occurs with a rotary blade roller.

### Experiments and Results

The processability of already incised prepregs on an AFP machine (Coriolis C-Solo) was tested in the first trials. For this purpose, a prepreg master spool was cut on a slitting machine to different tape widths that are customary and processable for conventional AFP machines. For better comparability, both a commercially available prepreg TORAYCA P2352W-19 (T800SC/3900-2B, 19) and the same prepreg with incisions TORAYCA E2352W-1940 (T800SC/3900-2B, 19) already made according to Patent Documents 1 and 2 were used. Despite fine cuts and fiber interruptions, the cohesion of the incised prepreg tape is indistinguishable from a conventional prepreg and processing is possible without any problems. Even with small tape widths of 1/4" (6.35 mm) no warping or tearing could be observed.

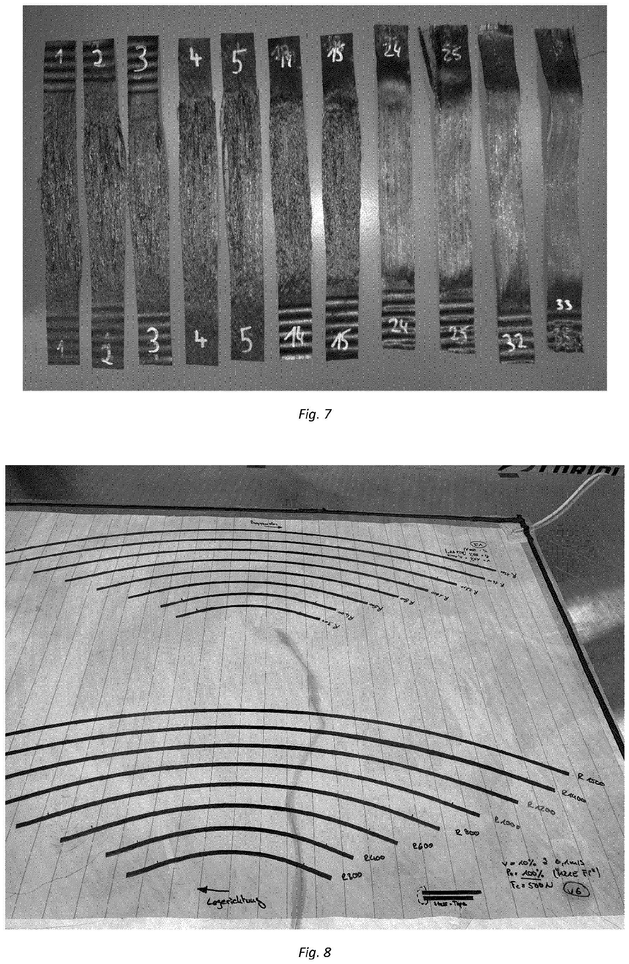

The subsequent experiments should serve to show two different approaches and improvements. The former is intended to show the improvement in steering capabilities by heating the incised prepreg as it is laid down and placing it under tension along a curve (Fig. 8). The cuts in the prepreg were intended to show that the laying quality is improved and that tighter radii can be realized. It was expected that due to the improved stretch properties of the material, the outer fibers would be able to lengthen compared to the inner ones, thus realizing length compensation and better following the curve.

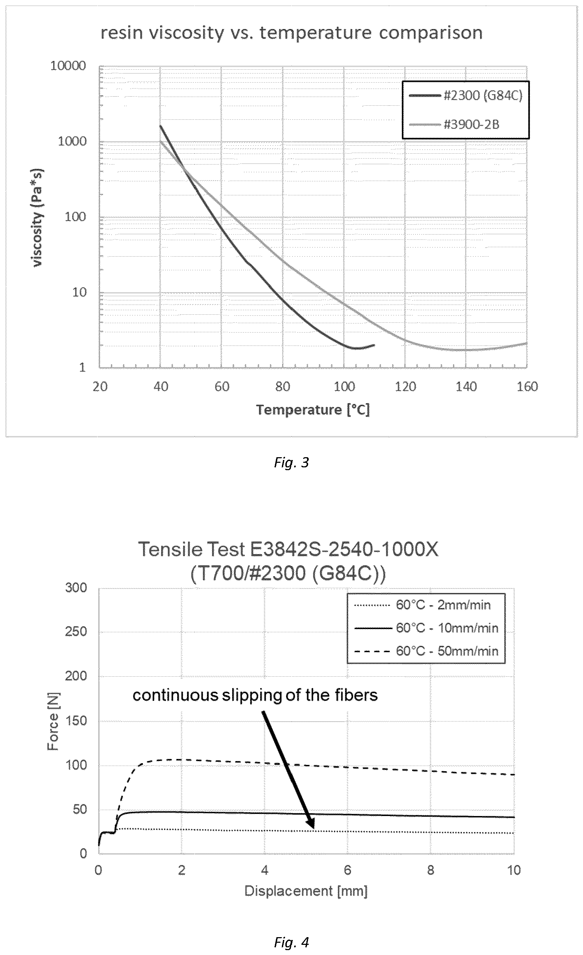

In order to ensure that the force required to pull the fibers apart in the direction of the fibers is below the process-related tensile stress in the machine, tensile tests on the incised prepreg were done on a tensile testing machine (ZwickRoell Allround floor-standing 100kN). The dependency of the required force on temperature is shown in Fig. 6 as an example, the dependency of the pulling speed is shown in Fig. 4. The higher the temperature and the slower the pulling speed, the lower the forces required to stretch the material and the more constant the force curve. For the prepreg resin systems, commercially available as #2300 (G84C) and #3900-2B from Toray, a temperature of greater than 60°C has proven to be suitable for minimizing the forces that occur, since the viscosity decreases with increasing temperature, see Fig. 3. The result of the tensile tests can be seen in Fig. 7, where specimens with different temperatures were tested. The test temperature of the tensile specimens is shown from left to right increasing from 20°C to 60°C. In particular, the samples at 60°C show even sliding without damage and fraying.

The behavior of being able to pull the material apart with less tensile force as the temperature rises was used to heat the material locally and in a targeted manner in the process with a heating device (6). The target was laminating temperatures of 60°C - 100°C in order to keep the viscous properties and the resulting forces as small as possible, the laying speed was also reduced to 40mm/s so that the relative stretching speed (difference in length between inside and outside in relation to the laying speed) are in the range of 0.1 mm/s - 2 mm/s. The temperature was measured using a pyrometer and the power of the UV lamp was controlled. Due to extraneous radiation and reflection from the UV lamp, the maximum temperature at the time of contact with the heated incised prepreg was initially measured using a thermocouple glued to the table.

The improved steering behavior was examined where tapes were not processed in a straight line but on curved tracks. Radii between 300 mm and 1500 mm were considered, see Fig. 8. Due to the difference in length between the inner edge and the outer edge, defects such as waves or folds with a smaller radius increase. When processing an incised prepreg and heating it sufficiently with the heating device, improved behavior was observed compared to a non-incised prepreg. The material could lengthen, especially on the outer edge, forms fewer wrinkles and, even with smaller radii, adheres better to the substrate without loosening due to tension.

An optical measuring device (ATOS Core 300) was used for the evaluation. Images of different radii of prepreg to incised prepreg was recorded three-dimensionally to compare its behavior and failures such as out of plane waviness. Both failure size and frequency were evaluated with specially developed software. Compared to the prepreg, the incised prepreg had fewer defects combined with a lower level than the conventional prepreg without incisions.

Furthermore, preforms with several layers and different fiber orientations (biaxial, triaxial) were produced, formed and cured in a hot forming process. The tool used for this was a 3D generic complex geometry with a sphere and an arrow-shaped suitcase corner, which is usually used for draping tests and for evaluating the forming behavior. Here, the incised laminate showed improved formability in that complex corners and areas can be formed better than unincised laminates, since the material can be deep-drawn locally without the layers slipping off one another or locking or warping one another.

## Claims

1. A lamination device for producing a fiber reinforced laminate comprising
at least one prepreg base material roll (1) for providing a prepreg base material (10a),
at least one incision apparatus (8) for forming one or more incisions (11c) in the prepreg base material (10a) to obtain an incised prepreg (11a),
at least one cutting device (9) for cutting the incised prepreg (11a) in transverse direction (TD) into at least one incised layer, and
a lamination roller (4) for laminating the incised layer onto a lamination surface (7) to form a laminate (12),
wherein the prepreg base material (10a) comprises unidirectional reinforcing fibers and a polymer matrix system.

2. The lamination device according to claim 1, wherein the incision apparatus (8) comprises a rotary blade roller (8a) and a supporting roller (8b), preferably the rotary blade roller (8a) comprising one or more blades, preferably the rotary blade roller (8a) comprising one or more blades and the supporting roller (8b) comprising one or more blades.

3. The lamination device according to claim 1, wherein the incision apparatus (8) comprises a laser cutter.

4. The lamination device according to any one of the preceding claims, further comprising a heating device (6) for heating at least a part of the incised prepreg (11a) and/or of the lamination surface (7), wherein the heating device (6) is located upstream of the lamination roller (4) and downstream of the cutting device (9).

5. A method for producing a multilayer laminate (12), the method comprising the steps of
a) providing a prepreg base material (10a) by a prepreg base material roll (1) and passing the prepreg base material (10a) to at least one incision apparatus (8), wherein the prepreg base material (10a) comprises unidirectional reinforcing fibers and a polymer matrix system,
b) forming one or more transverse incisions (11c) and/or slope incisions (11c) in the prepreg base material (10a) by the at least one incision apparatus (8) to obtain an incised prepreg (11a), and passing the incised prepreg (11a) to a lamination roller (4),
c) laminating, preferably staggered laminating, the incised prepreg (11a) onto a lamination surface (7) by the lamination roller (4) so as to form a laminate (12) on a lamination surface (7).

6. The method according to claim 5, further comprising the step of
d) heating at least a part of the incised prepreg (11a) by a heating device (6), wherein step d) takes place after step b) and before step c).

7. The method according to any one of claims 5 or 6, wherein the incision apparatus (8) comprises a rotary blade roller (8a) and a supporting roller (8b), the rotary blade roller (8a) comprising one or more blades and/or the supporting roller (8b) comprising one or more blades.

8. The method according to claim 7, wherein the number and/or the angle and/or the width of the blades of the rotary blade roller (8a) can be changed during performing the method, and/or wherein the number and/or the angle and/or the width of the blades of the supporting roller (8b) can be changed during the method.

9. The method according to claim 8, wherein the change of the number and/or of the angle and/or the width of the blades is done manually or automatically.

10. The method according to any one of claims 5 to 9, wherein the forming of one or more incisions (11c) in the prepreg base material (10a) in step b) is done continuously or non-continuously.

11. The method according to any one of claims 5 to 10, wherein the incised prepreg (11a) is laminated in step c) along a straight line and/or along a curve.

12. The method according to any one of claims 5 to 11, wherein in step b) the distance between incisions (11c) in the prepreg base material (10a) in a machine direction (MD) is of from 10 mm to 300 mm.

13. The method according to any one of claims 5 to 12, wherein a lamination device according to any one of claims 1 to 4 is used.

14. The method according to any one of claims 5 to 13, wherein the unidirectional reinforcing fibers comprise or consist of carbon fibers, glass fibers, polymer fibers or natural fibers.

15. A laminate obtained by the method according to any one of claims 5 to 14.
